Europäisches Patentamt

European Patent Office

Office européen des brevets

(19)

(11) Numéro de publication: **0 275 732 B1**

## FASCICULE DE BREVET EUROPEEN

(12)

(45) Date de publication de fascicule du brevet:
03.07.91

(51) Int. Cl.5: **A41H 15/00**, B65H 9/08, B26D 7/01

(21) Numéro de dépôt: 87402790.7

(22) Date de dépôt: 08.12.87

(54) Table à aiguilles pour matelas de tissus.

(30) Priorité: 19.12.86 FR 8617874

(43) Date de publication de la demande:
27.07.88 Bulletin 88/30

(45) Mention de la délivrance du brevet:
03.07.91 Bulletin 91/27

(84) Etats contractants désignés:
AT BE CH DE ES GB GR IT LI LU NL SE

(56) Documents cités:
DE-C- 3 538 485    FR-A- 2 103 657
FR-A- 2 552 635    US-A- 1 949 262
US-A- 2 378 423    US-A- 4 200 272

(73) Titulaire: **Glasman, Léon**
**64 rue Charles Laffitte**
**F-92200 Neuilly-sur-Seine(FR)**

Titulaire: **Prioux, Jean Omer Maurice**
**16 Villa de l'Alliance**
**F-95110 Sannois(FR)**

(72) Inventeur: **Glasman, Léon**
**64 rue Charles Laffitte**
**F-92200 Neuilly-sur-Seine(FR)**
Inventeur: **Prioux, Jean Omer Maurice**
**16 Villa de l'Alliance**
**F-95110 Sannois(FR)**

(74) Mandataire: **Bonnetat, Christian et al**
**CABINET BONNETAT 23, Rue de Léningrad**
**F-75008 Paris(FR)**

Rank Xerox (UK) Business Services

## Description

La présente invention concerne les tables à aiguilles sur lesquelles sont disposés des matelas de tissus ou analogues, destinés à être découpés suivant un contour particulier.

On connaît déjà, par le brevet US-A-1 949 262, une table à aiguilles comportant un plateau supérieur fixe pourvu d'ouvertures et destiné à recevoir le matelas de tissus, un plateau inférieur mobile parallèle au plateau supérieur, et une rangée d'aiguilles normalement solidaires dudit plateau inférieur, mais pouvant être exceptionnellement séparées dudit plateau inférieur, par exemple en cas d'usure ou de casse. Des moyens pour imprimer un mouvement de translation du plateau inférieur par rapport au plateau supérieur suivant une direction perpendiculaire aux plateaux sont également prévus, et permettent ainsi, après montée du plateau inférieur vers le plateau supérieur, d'enfiler les couches de tissus pour constituer un matelas. Cependant, durant la découpe proprement dite du matelas de tissus, certaines aiguilles, de par leur emplacement, peuvent gêner le déplacement de l'outil de coupe. Cela risque d'entraîner une découpe qui ne respecte pas, en certains endroits, le contour dudit patron.

La présente invention a pour objet une table à aiguilles permettant d'assurer un blocage temporaire des aiguilles amovibles sur ledit plateau inférieur, notamment pendant l'opération de découpe proprement dite ainsi que pendant la descente de celui-ci.

A cet effet, la table à aiguilles pour matelas de tissus du type comportant :
- un plateau supérieur fixe pourvu d'ouvertures, et destiné à recevoir ledit matelas de tissus ;
- un plateau inférieur mobile, sensiblement parallèle audit plateau supérieur ;
- une pluralité d'aiguilles susceptibles d'être introduites dans lesdites ouvertures du plateau supérieur, et liées audit plateau inférieur ; et,
- des moyens pour imprimer un mouvement de translation dudit plateau inférieur par rapport audit plateau supérieur fixe, suivant une direction perpendiculaire auxdits plateaux,

est remarquable, selon l'invention, en ce que lesdites ouvertures dudit plateau supérieur fixe sont réparties selon un quadrillage, en ce que ledit plateau inférieur est constitué d'au moins une première et une seconde plaques superposées comportant, chacune, une pluralité d'orifices agencés de façon identique et correspondant aux ouvertures dudit plateau supérieur, et dans lesquels lesdites aiguilles sont susceptibles d'être introduites, et en ce que au moins l'une desdites plaques est susceptible de coulisser, de façon limitée, par rapport à l'autre plaque grâce à des moyens d'actionnement communiquant auxdites plaques deux positions relatives extrêmes, une première position pour laquelle lesdites aiguilles sont libres dans lesdits orifices, et une seconde position pour laquelle lesdites aiguilles sont bloquées dans lesdits orifices par coincement entre lesdites plaques.

Ainsi, grâce à l'invention, lesdites aiguilles peuvent être bloquées temporairement sur ledit plateau inférieur, grâce au déplacement relatif des deux plaques le constituant, entraînant le coincement des aiguilles par le désalignement axial des orifices correspondants ménagés dans lesdites plaques.

On remarquera que le document DE-C-3 538 485 décrit un système de fixation d'éléments allongés par le coulissement de deux éléments mobiles, relativement l'un à l'autre. Toutefois, ce système nécessite que l'extrémité des éléments à fixer soit élastique.

Dans une forme préférée de réalisation, ladite première plaque, disposée en regard dudit plateau supérieur, est susceptible de coulisser sur ladite seconde plaque sous l'action desdits moyens d'actionnement. Le coulissement de la première plaque peut alors être guidé par deux rebords latéraux fixés de part et d'autre à ladite première plaque.

Avantageusement, le coulissement de ladite première plaque est limité, dans les deux positions extrêmes par des butées disposées sur ladite seconde plaque.

Selon une autre caractéristique de l'invention, il peut être prévu des moyens de rappel dans la première position de ladite première plaque par rapport à la seconde. Ces moyens de rappel peuvent être électriques, mécaniques, hydrauliques, pneumatiques, magnétiques ou autres.

Afin que lesdites aiguilles soient convenablement positionnées dans lesdits orifices, ceux-ci sont de préférence circulaires. Avantageusement, pour faciliter l'introduction desdites aiguilles dans le plateau inférieur, l'entrée des orifices de ladite première plaque est conique.

Les figures du dessin annexé feront bien comprendre comment l'invention peut être réalisée. Des références indentiques désignent des éléments semblables.

La figure 1 est une vue en plan schématique d'une table à aiguilles selon l'invention.

La figure 2 représente une vue en perspective du plateau inférieur selon l'invention.

Les figures 3 et 4 sont des vues en coupe du plateau inférieur illustré sur la figure 2 respectivement selon la ligne III-III et la ligne IV-IV de celle-ci.

Les figures 5 et 6 représentent partiellement, à une échelle agrandie, les deux positions extrêmes occupées par les deux plaques dudit plateau inférieur, à savoir une première position pour laquelle l'aiguille représentée est libre dans les orifices desdites plaques, et une seconde position pour laquelle l'aiguille est bloquée par coincement entre lesdites plaques.

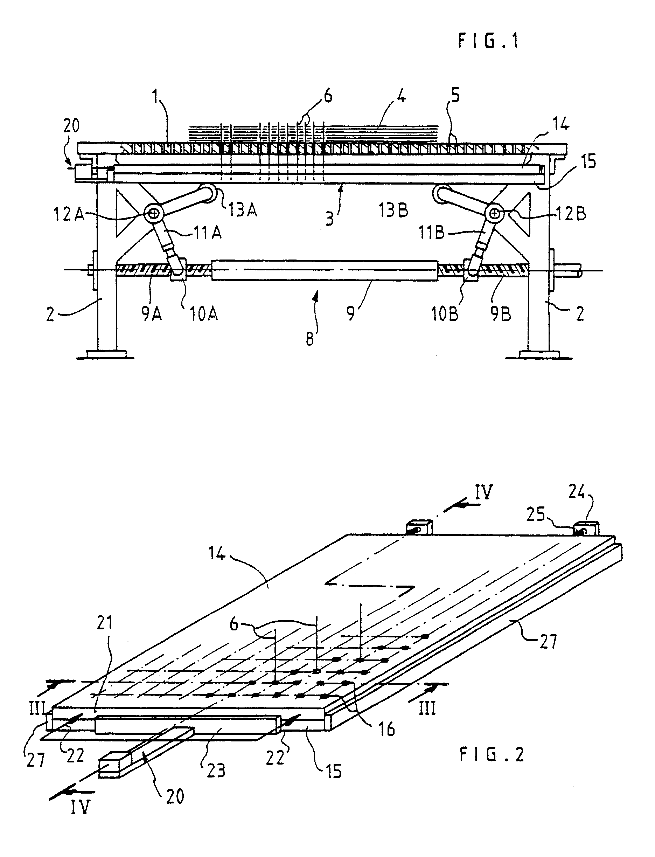

La table à aiguilles montrée sur la figure 1 comprend un plateau supérieur fixe 1 solidaire de montants verticaux 2, et un plateau inférieur mobile 3, parallèle au plateau supérieur. Sur ce dernier est disposé un matelas de tissus 4 destiné à être découpé suivant un contour déterminé, par l'intermédiaire d'un outil de coupe. Une pluralité d'ouvertures, telles que des trous 5 ayant chacun une section circulaire identique, sont ménagées dans le plateau supérieur 1 selon un quadrillage précis.

Une pluralité d'aiguilles 6, dont certaines ont été représentées mais de façon aléatoire, sont introduites dans les trous 5 du plateau supérieur 1, et sont liées au plateau inférieur 3. L'emplacement des aiguilles 6 ainsi que leur nombre sont déterminés en fonction du contour à découper et/ou des motifs de tissus 4 reposant sur ce plateau.

La table à aiguilles comporte des moyens 8 pour imprimer un mouvement de translation du plateau inférieur 3 par rapport au plateau supérieur fixe 1, suivant une direction perpendiculaire aux plans parallèles définis par les plateaux 1 et 3. Ces moyens 8 sont analogues à ceux décrits dans le brevet FR-A-2 103 657 mais pourrait être de conception différente, sans sortir pour cela du cadre de l'invention. Schématiquement, les moyens 8 sont constitués par une tige 9, parallèle aux plateaux, et portée à ses extrémités dans des paliers, non représentés, agencés dans les montants 2.

La tige 9 comporte deux parties filetées 9A et 9B en sens opposé coopérant respectivement avec des écrous 10A et 10B solidaires, chacun, du bras inférieur d'un levier coudé 11A et 11B monté rotatif autour d'un axe 12A et 12B lié à un montant 2. Chaque bras supérieur des leviers 11A et 11B porte un galet rotatif 13A et 13B en contact, libre ou prisonnier, avec la face inférieure du plateau inférieur 3. La tige peut être mue par une manivelle, comme cela était le cas dans le brevet précité, ou bien par un moteur électrique, non illustré.

Comme on peut le voir sur la figure 1, les aiguilles 6 sont liées au plateau inférieur 3. Ce dernier est monté sous l'action des moyens 8 jusqu'à ce que les extrémités libres des aiguilles 6, après avoir traversé les trous 5, débouchent au-dessus du plateau supérieur 1.

Selon l'invention, les aiguilles 6 sont avantageusement bloquées par coincement dans le plateau inférieur 3. Pour cela, le plateau 3 est constitué de deux plaques superposées, une première plaque 14 tournée vers le plateau supérieur 1, et une seconde plaque 15, dont la face inférieure est au contact avec les galets 13A et 13B.

Comme on peut davantage le voir sur les figures 2 à 4, chaque plaque 14 et 15 est percée respectivement d'orifices 16 et 17 dont l'emplacement et le nombre sont identiques à l'emplacement et le nombre des trous 5 ménagés dans le plateau supérieur 1. Dans ce mode de réalisation, les orifices 16 et 17 sont de section circulaire identique. Cependant, les orifices 17 de la seconde plaque 15 ne sont pas débouchants pour des raisons évidentes, et l'entrée des orifices 16 de la première plaque 14 est conique afin de faciliter l'insertion des aiguilles 6 dans ceux-ci.

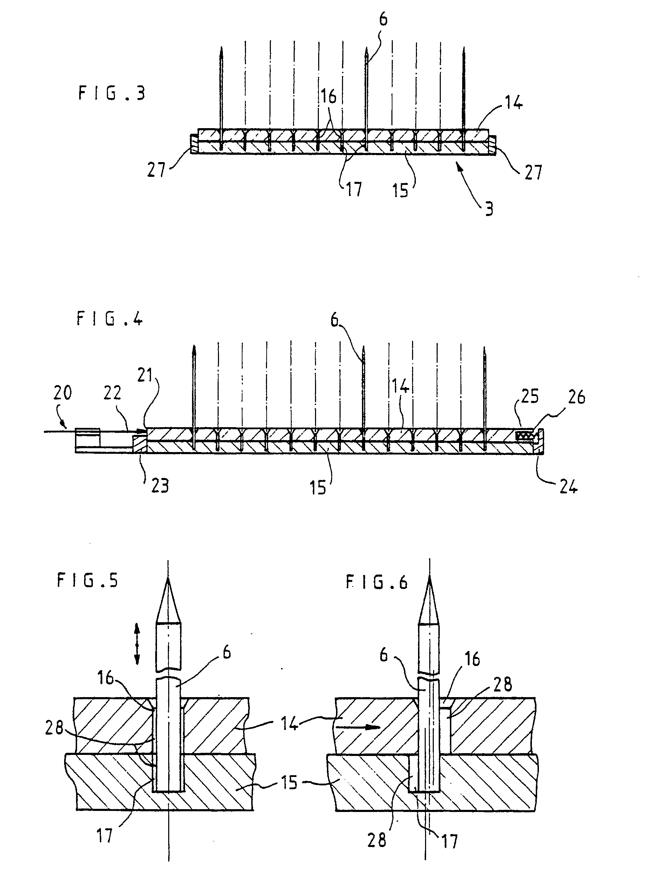

Pour pourvoir assurer le blocage par coincement des aiguilles 6 introduites dans les orifices 16 et 17, il est nécessaire dans ce mode de réalisation que l'une des plaques soit susceptible de coulisser, de façon limitée, par rapport à l'autre plaque par l'intermédiaire de moyens d'actionnement comme cela sera explicité en regard des figures 5 et 6. Dans cette réalisation, la première plaque 14 peut coulisser par rapport à la seconde plaque 15 grâce à des moyens d'actionnement 20 schématiquement représentés sur les figures, mais pouvant être au moins un vérin fluidique ou électrique agissant sur la face latérale 21 de la plaque 14, comme le montre la flèche 22 desdites figures.

La course de coulissement de la première plaque 14 est limitée par des butées 23 et 24 fixées, par des vis non représentées, à la première plaque 15. Des moyens de rappel, par exemple des ressorts 25, sont prévus entre les butées 24 et la face latérale 26, opposée à la face 21, de la première plaque 14. De plus, le coulissement de cette dernière, par rapport à la seconde plaque 15, est guidé par deux rebords latéraux 27 disposés de part et d'autre de la plaque 15.

Lors de la mise en place des aiguilles 6, dont le nombre et l'emplacement ont été préalablement déterminés en fonction du contour à découper et des motifs des tissus, les orifices 16 et 17 des plaques 14 et 15 sont sensiblement coaxiaux (figure 5). La plaque mobile 14 est par conséquent dans une première position extrême pour laquelle les aiguilles 6 introduites dans les orifices 16 et 17 sont libres axialement, un jeu fonctionnel 28 étant prévu entre le diamètre des aiguilles 6 et les orifices 16 et 17. Chaque aiguille est donc sensiblement coaxiale aux orifices respectifs 16 et 17.

La figure 4 montre la première plaque 14 dans cette première position. La face latérale 21 de la plaque 14 est pressée contre la butée 23 liée à la plaque 15 sous l'action des ressorts 25. La fixation des aiguilles 6 s'effectue par le coulissement, de façon limitée, correspondant en fait aux jeux fonctionnels 28 existant entre chaque aiguille et les orifices respectifs 16 et 17, grâce à l'action du vérin constituant, par exemple, les moyens d'actionnement 20.

De ce fait, la pemière plaque 14 du plateau inférieur 3 occupe alors la seconde position extrême pour laquelle les aiguilles 6 sont bloquées dans les orifices 16 et 17 par coincement entre les plaques 14 et 15. Comme le montre la figure 6, la plaque 14 est déplacée vers la droite, une partie de paroi de l'orifice 16 entraînant l'aiguille 6 contre une partie de paroi opposée de l'orifice 17, de manière à coincer l'aiguille entre les deux plaques. Dans cette configuration les trous des orifices 16 et 17, et de l'aiguille 6, tout en restant sensiblement parallèles, ne sont plus coaxiaux. Le jeu fonctionnel entre l'aiguille 6 et l'orifice 16 est situé à droite sur la figure 6, tandis que le jeu fonctionnel entre l'aiguille 6 et l'orifice 17 est situé à gauche.

Ainsi, dans cette seconde position, le plateau inférieur 3 peut être monté vers le plateau supérieur par les moyens 8, pour que les aiguilles 6, bloquées par coincement, pénètrent dans les trous 5 correspondants, après quoi les couches du matelas de tissus peuvent être piquées sur les extrémités des aiguilles émergeant du plateau 1. Le matelas de tissu peut alors être découpé. La descente du plateau inférieur 3 s'effectue par inversion du sens de rotation des moyens 8, les aiguilles étant toujours maintenues entre les plaques du plateau 3. Le démontage des aiguilles peut ensuite être obtenu par relâchement des moyens d'actionnement 20, les ressorts 25 ramenant la première plaque 14 en position initiale (figure 5).

**Revendications**

1. Table à aiguilles pour matelas de tissus, du type comportant :
   - un plateau supérieur fixe (1) pourvu d'ouvertures (5), et destiné à recevoir ledit matelas de tissus (4) ;
   - un plateau inférieur mobile (3), sensiblement parallèle audit plateau supérieur ;
   - une pluralité d'aiguilles (6) susceptibles d'être introduites dans lesdites ouvertures du plateau supérieur, et liées audit plateau inférieur ; et,
   - des moyens (8) pour imprimer un mouvement de translation dudit plateau inférieur (3) par rapport audit plateau supérieur fixe (1), suivant une direction perpendiculaire auxdits plateaux,

   caractérisée en ce que lesdites ouvertures (5) dudit plateau supérieur fixe (1) sont réparties selon un quadrillage, en ce que ledit plateau inférieur (3) est constitué d'au moins une première (14) et une seconde (15) plaques superposées comportant, chacune, une pluralité d'orifices (16 et 17) agencés de façon identique et correspondant aux ouvertures (5) dudit plateau supérieur (1), et dans lesquels lesdites aiguilles (6) sont susceptibles d'être introduites, et en ce que au moins l'une desdites plaques est susceptible de coulisser, de façon limitée, par rapport à l'autre plaque grâce à des moyens d'actionnement (20), communiquant auxdites plaques (14 et 15) deux positions relatives extrêmes, une première position pour laquelle lesdites aiguilles (6) sont libres dans lesdits orifices, et une seconde position pour laquelle lesdites aiguilles (6) sont bloquées dans lesdits orifices par coincement entre lesdites plaques.

2. Table à aiguilles selon la revendication 1, caractérisée en ce que ladite première plaque (14), disposée en regard dudit plateau supérieur (1), est susceptible de coulisser sur ladite seconde plaque (15) sous l'action desdits moyens d'actionnement (20).

3. Table à aiguilles selon l'une des revendications 1 ou 2, caractérisée en ce que le coulissement de ladite première plaque (14) est guidé par deux rebords latéraux (27) fixés de part et d'autre à ladite seconde plaque (15).

4. Table à aiguilles selon l'une des revendications 1 à 3, caractérisée en ce que le coulissement de ladite première plaque (14) est limité, dans les deux positions extrêmes, par des butées (23 et 24) disposées sur ladite seconde plaque (15).

5. Table à aiguilles selon l'une des revendications 1 à 4, caractérisée en ce qu'il est prévu des moyens de rappel (25) dans la première position de ladite première plaque (14) par rapport à la seconde plaque (15).

6. Table à aiguilles selon l'une des revendications 1 à 5, caractérisée en ce que lesdits orifices (16 et 17) des première et seconde plaques sont circulaires.

7. Table à aiguilles selon l'une des revendications 1 à 6, caractérisée en ce que l'entrée des orifices (16) de ladite première plaque (14) est conique.

**Claims**

1. Pinning table for fabric stacks of the type including :
   - an upper fixed platen (1) provided with openings (5), and intended to receive said fabric stack (4) ;
   - a lower movable platen (3), substantially parallel to said upper platen ;

- a plurality of pins (6) adapted to be introduced into said openings in the upper platen, and connected to said lower platen ; and
- means (8) for imparting a translational movement to said lower platen (3) with respect to said fixed upper platen (1), in a direction perpendicular to said platens, characterized in that said openings (5) of said upper fixed platen (1) are distributed according to a lattice, in that said lower platen (3) is formed from at least a first (14) and a second (15) superimposed plates each having a plurality of orifices (16 and 17) arranged identically and corresponding to the openings (5) in said upper platen (1), and in which said pins (6) can be introduced, and in that at least one of said plates is slidable, in a limited way, with respect to the other plate through actuating means (20) communicating two endmost relative positions to said plates (14 and 15), a first position in which said pins (6) are free in said orifices and a second position in which said pins (6) are locked in said orifices by jamming between said plates.

2. Pinning table according to claim 1, characterized in that said first plate (14), disposed opposite said upper platen (1), is slidable over said second plate (15) under the action of said actuating means (20).

3. Pinning table according to one of claims 1 or 2, characterized in that sliding of said first plate (14) is guided by two lateral flanges (27) fixed on each side to said second plate (15).

4. Pinning table according to one of claims 1 to 3, characterized in that sliding of said first plate (14) is limited, in the two end positions, by stops (23 and 24) disposed on said second plate (15).

5. Pinning table according to one of claims 1 to 4, characterized in that means (25) are provided for returning said first plate (14), to the first position, with respect to the second plate (15).

6. Pinning table according to one of claims 1 to 5, characterized in that said orifices (16 and 17), in the first and second plates, are circular.

7. Pinning table according to one of claims 1 to 6, characterized in that the top of the orifices (16) of said first plate (14) is conical.

**Ansprüche**

1. Nadeltisch für Stoffstapel mit einer oberen festen Nähplatte (1), in der Öffnungen (5) vorgesehen sind und von der der Stoffstapel (4) aufgenommen werden soll,

einer unteren beweglichen Nähplatte (3), die zur oberen Nähplatte allgemein parallel liegt,

mehreren Nadeln (6), die in die Öffnungen der oberen Nähplatte eingeführt werden können und mit der unteren Nähplatte verbunden sind, und

eine Einrichtung (8) zum Veranlassen einer Translationbewegung der unteren Nähplatte (3) gegenüber der oberen festen Nähplatte (1) nach einer senkrecht zu den Nähplatten verlaufenden Richtung, dadurch **gekennzeichnet**, daß die Öffnungen (5) der oberen festen Nähplatte (1) nach einem Raster oder Gitternetz verteilt angeordnet sind, daß die untere Nähplatte (3) aus zumindest einer ersten und einer zweiten Platte (14 bzw. 15) besteht, die übereinanderliegend jeweils mehrere Öffnungen (16 und 17) besitzen, die auf dieselbe Weise eingelassen sind und den Öffnungen (5) der oberen Nähplatte (1) entsprechen und in die die Nadeln (6) eingeführt werden können, und daß zumindest eine der Platten mit Begrenzung gegenüber der anderen Platte kraft der Betätigungseinrichtung (20) gleitend verschiebbar ist, indem den Platten (14 und 15) zwei relativ extreme Positionen vermittelt werden, und zwar eine erste Position, in der die Nadeln (6) in den Öffnungen frei sind, und eine zweite Position, in der die Nadeln durch Klemmung zwischen den Platten in den Öffnungen gesperrt sind.

2. Nadeltisch nach Anspruch 1, dadurch **gekennzeichnet**, daß die erste Platte (14) , die der oberen Nähplatte (1) zugewendet angeordnet ist, durch die Einwirkung der Betätigungseinrichtung (20) auf der zweiten Platte (15) gleitend verschoben werden kann.

3. Nadeltisch nach einem der vorhergehenden Ansprüche 1 oder 2, dadurch **gekennzeichnet**, daß die Gleitverschiebung der ersten Platte (14) von zwei beidseitig an der zweiten Platte (15) befestigten Seitenrandleisten (27) geführt wird.

4. Nadeltisch nach einem der vorhergehenden Ansprüche 1 bis 3, dadurch **gekennzeichnet**, daß die Gleitverschiebung der ersten Platte (14) durch die auf der zweiten Platte (15) angeordneten Anschläge (23 und 24) in beiden extremen Positionen begrenzt ist.

5. Nadeltisch nach einem der vorhergehenden Ansprüche 1 bis 4, dadurch **gekennzeichnet**, daß er mit einer Rückholeinrichtung (15) in die erste Position der ersten Platte (14) gegenüber der zweiten Platte (15) versehen ist.

6. Nadeltisch nach einem der vorhergehenden Ansprüche 1 bis 5, dadurch **gekennzeichnet**, daß die Öffnungen (16 und 17) in der ersten und der zweiten Platte kreisförmig ausgebildet sind.

7. Nadeltisch nach einem der vorhergehenden Ansprüche 1 bis 6, dadurch **gekennzeichnet**, daß der Eingang der Öffnungen (16) der ersten Platte (14) konisch ausgebildet ist.

FIG.1

FIG.2

EP 0 275 732 B1

FIG.3

6

16                    14

27                    27

17    15

3

FIG.4

6

20  22  21    14  25  26

23    15    24

FIG.5                    FIG.6

6                    6    16

16                        28

28    14

15

17    28  17

8